# EUROPEAN PATENT APPLICATION

(11) **EP 3 168 755 A1**
(43) Date of publication of application: **17.05.2017**
(21) Application number: 16165194.8
(22) Date of filing: 14.04.2016
(51) Int. Cl.: G06F 17/21

(54) **METHOD AND DEVICE FOR ADDING FONT**

(30) Priority: 13.11.2015 CN 201510777990
(71) Applicant: Xiaomi Inc., Beijing 100085 (CN)
(72) Inventor: GAO, Yi, 100085 BEIJING (CN); WANG, Hongqiang, 100085 BEIJING (CN); GE, Yunyuan, 100085 BEIJING (CN)
(74) Representative: Delumeau, François Guy

(57) **Abstract**

The present disclosure provides a method and a device for adding a font, which pertains to the field of mobile terminals. The method for adding a font includes: acquiring (101, 201) an image; recognizing (102) a text in the image as at least one character, the character being a font file corresponding to a single word or symbol; and adding (103) the character to a default system font library, the system font library being a font library for displaying a text on a user interface.

## Description

### TECHNICAL FIELD

The present disclosure generally relates to the field of mobile terminals, and more particularly, to a method and a device for adding a font.

### BACKGROUND

In a mobile terminal such as a smart phone, a tablet computer or the like, a default system font library is typically installed in advance. The system font library can be used for displaying text on the user interface.

If the user intends to modify the system font library, the user generally has to download another font library, and set the font library as the default system font library, in order to change the font of the text on the user interface.

### SUMMARY

In order to solve the problem that the displayed font can be modified only by manually downloading a font library, the present disclosure provides a method and a device for adding a font. The technical solution is as follows.

According to a first aspect of embodiments of the present disclosure, there is provided a method for adding a font, including:
acquiring an image;
recognizing a text in the image as at least one character, each character being a font file corresponding to a single word or a single symbol; and
adding the character to a default system font library, the system font library being a font library for displaying a text on a user interface.

Optionally, recognizing a text in the image as at least one character includes:
receiving a region selecting operation on the image; and
recognizing a text in a region selected by the region selecting operation, to obtain the at least one character.

Optionally, adding the character to the default system font library includes:
for each character, recognizing from the system font library at least one candidate standard word or symbol corresponding to the character;
receiving a word selecting operation on the at least one candidate standard word or symbol; and
in the system font library, replacing a candidate standard word or symbol selected by the word selecting operation with the character.

Optionally, the method further includes:
receiving a first restoring signal; and
restoring a designated character in the system font library to a corresponding candidate standard word or symbol according to the first restoring signal.

Optionally, the method further includes:
receiving a second restoring signal; and
restoring each character in the system font library to a corresponding candidate standard word or symbol according to the second restoring signal.

According to a second aspect of embodiments of the present disclosure, there is provided a device for adding a font, including:
an acquiring module configured to acquire an image;
a recognizing module configured to recognize a text in the image as at least one character, the character being a font file corresponding to a single word or symbol; and
an adding module configured to add the character to a default system font library, the system font library being a font library for displaying a text on a user interface.

Optionally, the recognizing module includes:
a receiving sub-module configured to receive a region selecting operation on the image; and
a first recognizing sub-module configured to recognize a text in a region selected by the region selecting operation, to obtain the at least one character.

Optionally, the adding module includes:
a second recognizing sub-module configured to, for each character, recognize from the system font library at least one candidate standard word or symbol corresponding to the character;
a first receiving sub-module configured to receive a word selecting operation on the at least one candidate standard word or symbol; and
a replacing sub-module configured to, in the system font library, replace a candidate standard word or symbol selected by the word selecting operation with the character.

Optionally, the device further includes:
a first receiving module configured to receive a first restoring signal; and
a first restoring module configured to restore a designated character in the system font library to a corresponding candidate standard word or symbol according to the first restoring signal.

Optionally, the device further includes:
a second receiving module configured to receive a second restoring signal; and
a second restoring module configured to restore each character in the system font library to a corresponding candidate standard word or symbol according to the second restoring signal.

According to a third aspect of embodiments of the present disclosure, there is provided a device for adding a font, including:
a processor; and
a memory for storing instructions executable by the processor;
wherein the processor is configured to perform:
acquiring an image;
recognizing a text in the image as at least one character, the character being a font file corresponding to a single word or symbol; and
adding the character to a default system font library, the system font library being a font library for displaying a text on a user interface.

In one particular embodiment, the steps of the method for adding a font are determined by computer program instructions.

Consequently, according to a fourth aspect, the invention is also directed to a computer program for executing the steps of a method for adding a font when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a hard disk.

Alternatively, the information medium can be an integrated circuit in which the program is incorporated, the circuit being adapted to execute the method in question or to be used in its execution.

The technical solution according to embodiments of the present disclosure may have the following beneficial effects.

An image containing a text is acquired. The text in the image is recognized as at least one character. The character is added into the default system font library. Thereby, it can solve the problem that the displayed font can be modified only by manually downloading a font library, and it can simplify the operation of modifying a font for a user: to modify a font, the user only needs to photograph a word or a symbol he is interested. In addition, the method can only modify the font of the word or symbol which is recognized, without modifying the font of all words and symbols.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for adding a font according to an exemplary embodiment of the present disclosure;
Fig. 2A is a schematic diagram illustrating implementation of a method for adding a font according to an exemplary embodiment of the present disclosure;
Fig. 2B is a schematic diagram illustrating implementation of a method for adding a font according to an exemplary embodiment of the present disclosure;
Fig. 2C is a schematic diagram illustrating implementation of a method for adding a font according to an exemplary embodiment of the present disclosure;
Fig. 3 is a flow chart illustrating a method for adding a font according to another exemplary embodiment of the present disclosure;
Fig. 4O is a flow chart illustrating a method for adding a font according to another exemplary embodiment of the present disclosure;

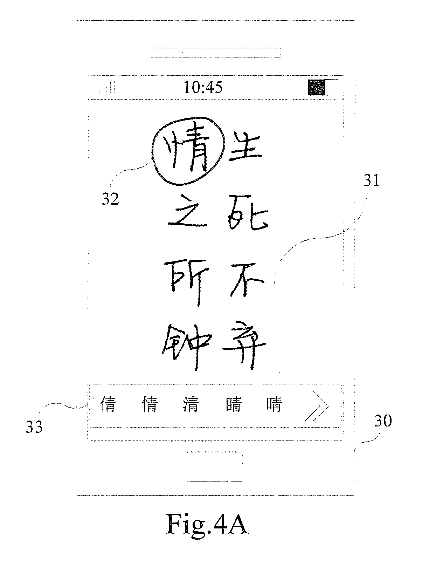

Fig. 4A is a schematic diagram illustrating implementation of a method for adding a font according to another exemplary embodiment of the present disclosure;

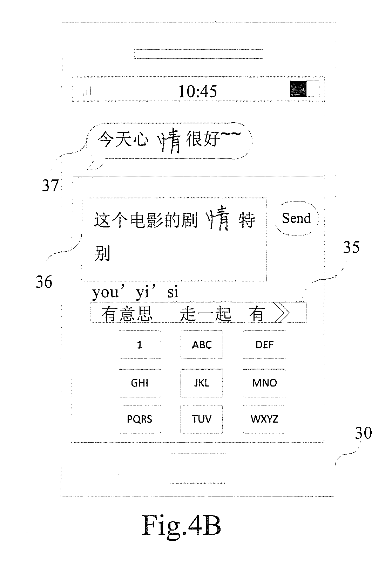

Fig. 4B is a schematic diagram illustrating implementation of a method for adding a font according to another exemplary embodiment of the present disclosure;

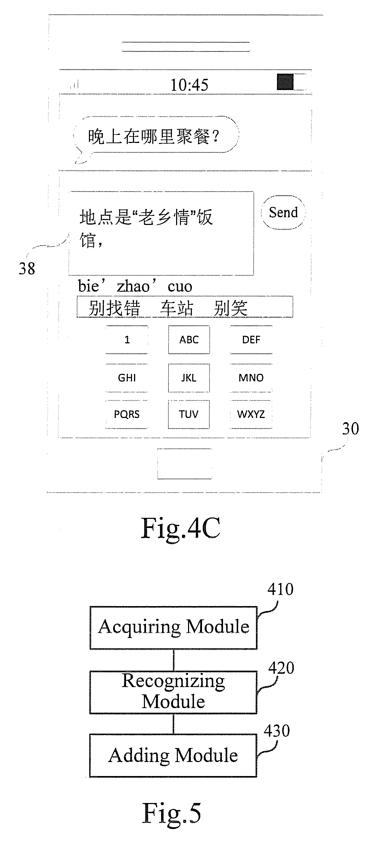

Fig. 4C is a schematic diagram illustrating implementation of a method for adding a font according to another exemplary embodiment of the present disclosure;
Fig. 5 is a block diagram of a device for adding a font according to an exemplary embodiment of the present disclosure;

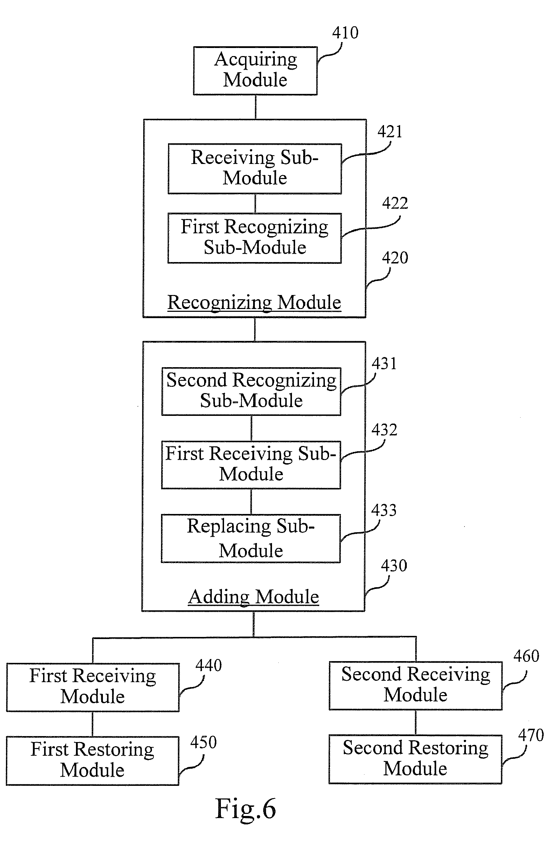

Fig. 6 is a block diagram of a device for adding a font according to another exemplary embodiment of the present disclosure; and

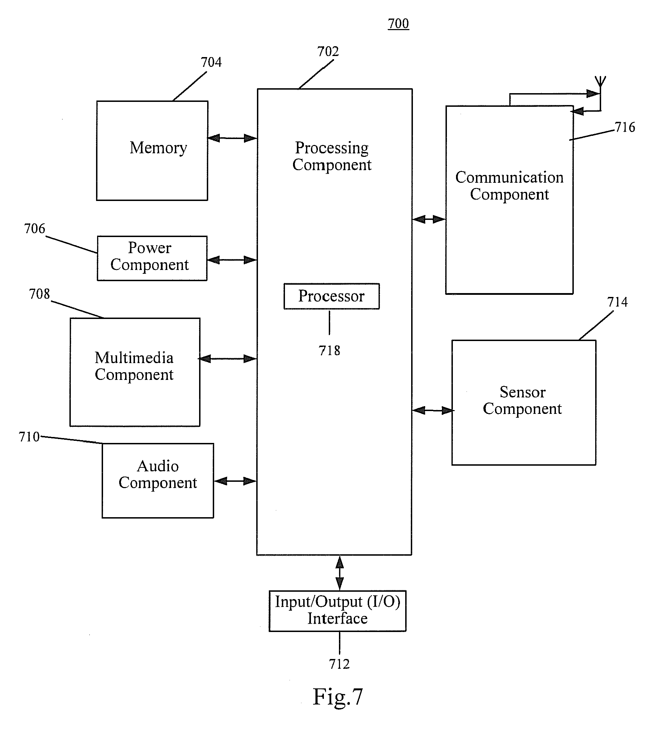

Fig. 7 is a block diagram of a device for adding a font according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

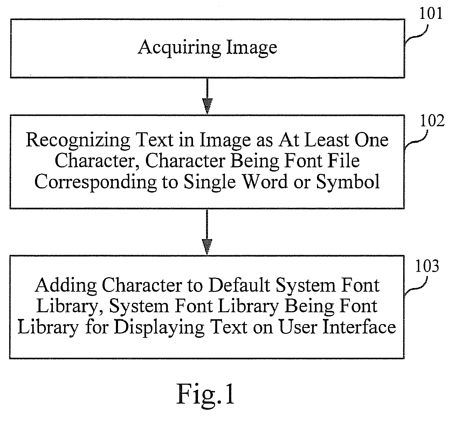

Fig. 1 is a flow chart illustrating a method for adding a font according to an exemplary embodiment of the present disclosure. The method for adding a font is applied in a mobile terminal having an image processing function. As shown in Fig. 1, the method for adding a font can include the following steps.

In step 101, an image is acquired.

The mobile terminal acquires an image. The image acquired by the mobile terminal contains a word or a symbol which the user indents to replace.

Optionally, the user can acquire the image with a photographing function of the terminal, or by storing the image directly from a browsed page.

In step 102, a text in the image is recognized as at least one character, the character being a font file corresponding to a single word or symbol.

The text in the image may be one or more words or symbols, and the mobile terminal recognizes each word or symbol in the image as a corresponding character. A character is a font file corresponding to a single word or symbol. A font file is a file used for displaying a word or symbol according to a typing size. The font in a font file is defined by a particular mathematic model, and the font file can be zoomed in or out or be rotated freely.

Optionally, a character is another standard word or symbol with a font different from the font of a default word or symbol in the system font library. Or, the character is in a handwriting font, such as a calligraphy font, or a scrawl font.

In step 103, the character is added to the default system font library, the system font library being a font library for displaying a text on a user interface.

The terminal displays a text on the user interface according to the system font library. The system font library stores a standard font which is default in the system. The system font library can also store a character having a personalized font characteristic which is added by the user.

Accordingly, in the method for adding a font provided by the present embodiment, an image containing a text is acquired. The text in the image is recognized as at least one character. The character is added into the default system font library. Thereby, it can solve the problem that the displayed font can be modified only by manually downloading a font library, and it can simplify the operation of modifying a font for a user: to modify a font, the user only needs to photograph a word or a symbol he is interested. In addition, the method can only modify the font of the word or symbol which is recognized, without modifying the font of all words and symbols.

In an exemplary embodiment, the mobile terminal is a smart phone. The user uses the smart phone to acquire an image containing a text.

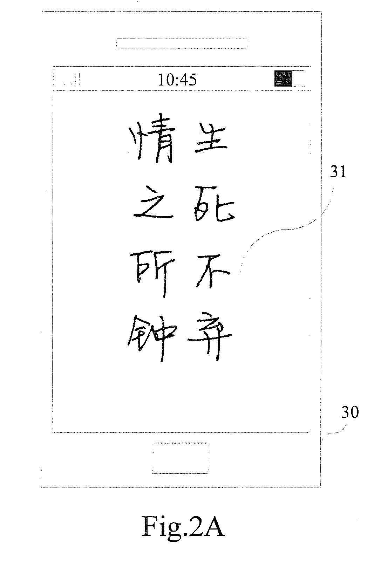

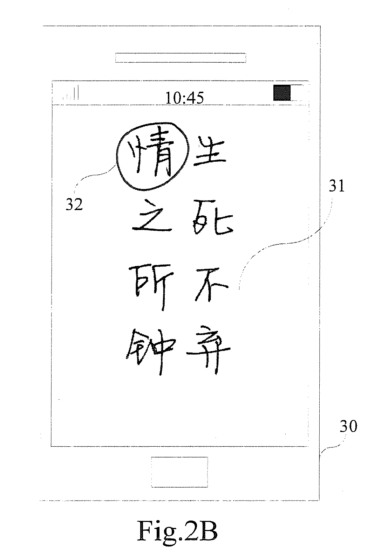

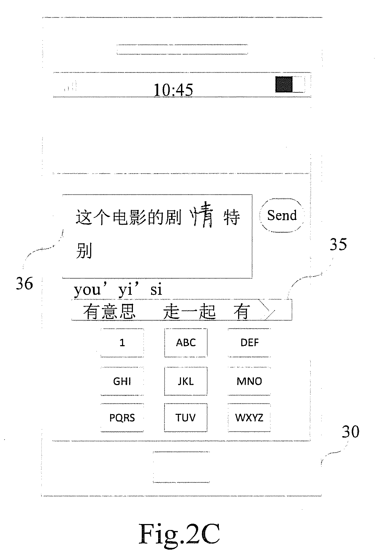

As shown in Fig. 2A, the user sees a sentence on a notebook of his friend, and is interested in some of the text in it. Therefore, the user uses the smart phone 30 to acquire an image 31. The user is interested in a word " 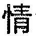 " in the image 31, and he wants to add it to the system font library. As shown in Fig. 2B, the user selects the image 31 from the smart phone 30, and performs a selecting operation on the image to select a region where the character " 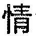 " is (the selected region is denoted by 32). The system recognizes the text in the selected region 32. After the text " 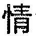 " is recognized, a corresponding a character " 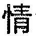 " is generated, and the character " 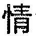 " is added to the default system font library. In subsequent operation, if a text " 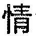 " is to be displayed on the user interface, the text will be displayed according to the newly added character " 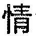 ", as shown in Fig. 2C.

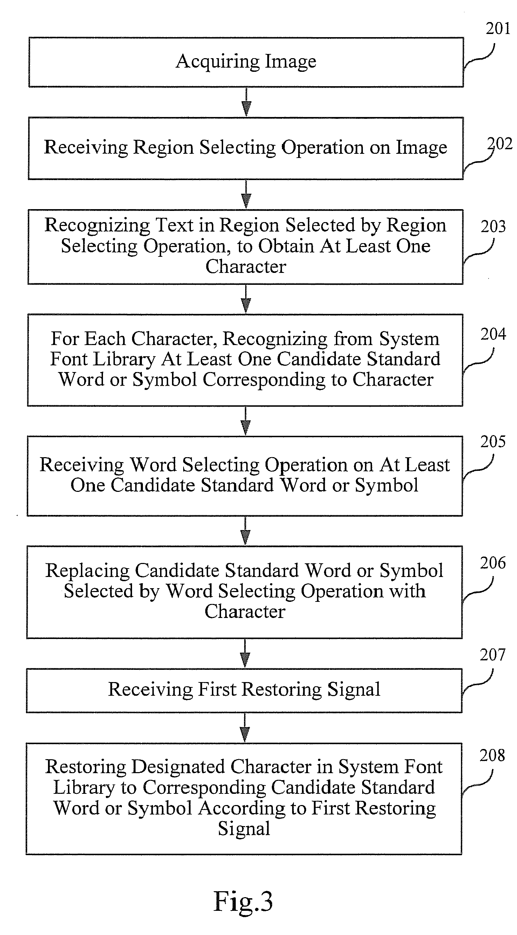

Fig. 3 is a flow chart illustrating a method for adding a font according to another exemplary embodiment of the present disclosure. The method for adding a font is applied in a mobile terminal having an image processing function. As shown in Fig. 3, the method for adding a font can include the following steps.

In step 201, the terminal acquires an image.

Optionally, the terminal is a smart device having a photographing function, such as a smart phone or a tablet computer.

Optionally, the use can acquire an image containing a text through the photographing function of the mobile terminal.

Alternatively, when the user is browsing a page, the user gets interested in an image on the browsed page, and saves the image to the smart terminal. In this way, the image containing a text can also be acquired.

For an instance, when a user, during travelling, gets interested in a beautiful handwriting of a text at an entrance of a scenic spot, the user can capture an image of the text.

In another instance, if a user, when talking with his friend through communication software, gets interested in a personalized characteristic of a text in a picture sent from the friend, the user can save the picture.

In step 202, a region selecting operation on the image is received.

The user saves the acquired image in the mobile terminal, and then he can perform a selecting operation with respect to the text in the image.

Optionally, the user can select the acquired image from font setting options of the mobile terminal.

After the user selects the image, the user can perform selecting operation with respect to the text in the image. The mobile terminal receives the region selecting operation on the image which is performed by the user.

Optionally, the user can select a region containing a text from the image by a gesture of drawing a circle, or by other means such as a touch pen.

In step 203, a text in a region selected by the region selecting operation is recognized, to obtain a character.

Optionally, the mobile terminal can transform a colorful image in the selected region to a gray-scale image; perform edge detection in the gray-scale image, to obtain a binary edge image; divide the binary edge image into several rows of regions; recognize several rectangular regions each containing a text from each row of regions; and generate a character based on the text in each rectangular region.

It should be noted that, how the mobile terminal recognizes the text in the image as a character is not limited in the present embodiment.

Optionally, the number of the recognized characters is at least one.

In step 204, for each character, at least one candidate standard word or symbol corresponding to the character is recognized from the system font library.

Moreover, the mobile terminal also recognizes the character in each rectangular region, and recognizes at least one candidate standard word or symbol corresponding to the character from the system font library. That is, for each character, there is at least one candidate standard word or symbol for the user to select.

For example, the candidate standard words or symbols corresponding to the character " 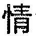 " may include: " 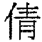 , 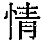 , 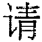 , 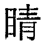 , 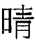 ".

Optionally, if neither of the candidate standard words or symbols automatically recognized by the system is correct, the user can also input a candidate standard word or symbol manually.

In step 205, a word selecting operation on the at least one candidate standard word or symbol is received.

The mobile terminal receives a word selecting operation on the at least one candidate standard word or symbol.

In addition, when there are more than one character is recognized in the region selected by the user, the mobile terminal can recognize the each character in the selected region one by one, and for each recognized character, perform a word selecting operation from the corresponding at least one candidate standard word or symbol, until all of the characters are recognized and candidate standard words or symbols are selected for all of the characters. That is, when there are more than one character in the selected region of the image, the steps 203-205 are performed for each character, until a unique corresponding standard word or symbol is determined for each character.

In step 206, in the system font library, a candidate standard word or symbol selected by the word selecting operation is replaced with the character.

The character is a font file corresponding to a single word or a symbol, each recognized character is different from the standard word or symbol in the system font library.

For a recognized character, a standard word or symbol in the system font library which corresponds to the character is replaced with the character. The originally default word or symbol is covered by the new character. Optionally, the originally default word or symbol is backup to another storage position.

After all of the characters are added to the system font library as replacement, wherever a text corresponding to any of the characters is to be displayed, on the system interface or a third party application interface, the character added by the user to the system font library will be displayed.

In step 207, the mobile terminal receives a first restoring signal.

If the user does not want to use the replacement character, the user can also restore the default system font library. After the user performs a restoring operation for a single character, the system receives a first restoring signal.

Optionally, an option can be provided in a font-library setting interface, which is unchecked in default. After the option is checked, it triggers the operation for restoring the font library. Alternatively, the user can select to restore the font library through a font-library setting application of a third party.

Optionally, the user can restore all of the characters, or can restore designated character.

In step 208, a designated character in the system font library is restored to a corresponding candidate standard word or symbol according to the first restoring signal.

Optionally, the user only wants to restore part of the characters, and keep the remaining characters. In this case, the user can select a character to be restored from a font-library setting interface or a third part application.

The mobile terminal generates a first restoring signal based on the user operation, and a character in the system font library designated by the user is restored to a corresponding candidate standard word or symbol.

After the restoration of the system font library is completed, the character designated for the restoration will be replaced by an originally default standard word or symbol when the user interface is displayed. The characters not designated for the restoration will still be used when the user interface is displayed.

Accordingly, in the method for adding a font provided by the embodiments of the present disclosure, an image containing a text is acquired; the text in the image is recognized as at least one character; the character is added to a default system font library. Thereby, it can solve the problem that displaying font can be modified only by manually downloading a font library, and it can achieve an effect of simplifying user operation to modify a font: to modify a font, the user only needs to photograph a character he likes. In addition, the method can only modify the font of the word or symbol which is recognized, without modifying the font of all words and symbols.

In the embodiments of the present disclosure, a region in the image is selected; the text in the selected region is recognized to obtain the character the user wants. Thereby, it can simplify the font adding operation, and enrich the forms of characters which can be selected by the user.

In the embodiments of the present disclosure, for each selected character, at least one candidate standard word or symbol corresponding to the character is recognized from the system font library. Thereby, it can avoid errors in word recognition, can improve accuracy in replacing of the words or symbols, and can improve user experience.

In the embodiments of the present disclosure, only for selected character, a corresponding standard word or symbol in the system font library will be replaced with the character. Thereby, it can avoid modifying the font of the whole text after the font is added. Thus, multiple fonts can be simultaneously displayed, and it can satisfy the demands of user for diversity.

In the embodiments of the present disclosure, a signal for restoring the system font library can be received, and the system font library can be restored according to the restoring signal. Thereby, it can avoid the situation that the user cannot remove a character and restore the font to the default state when the user loses interest in the character over time, and it can simplify the restoring operation of the added font.

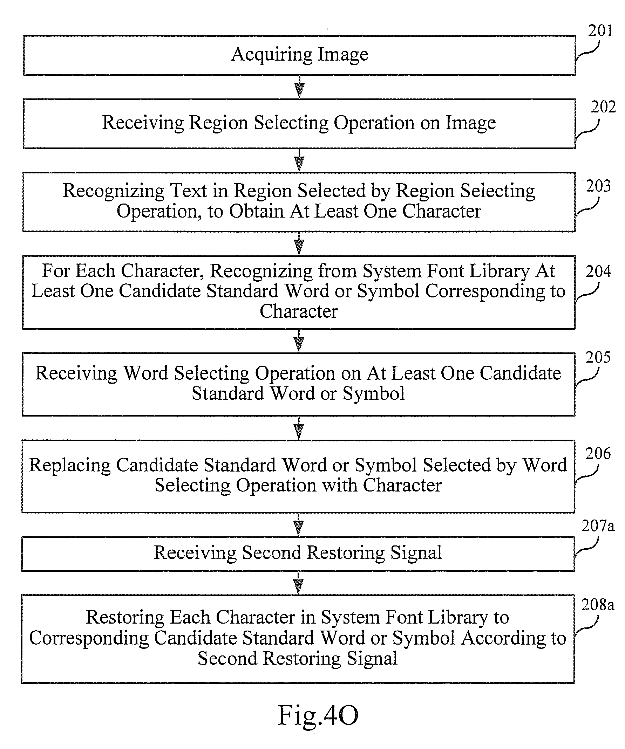

Based on the optional embodiment as shown in Fig. 3, the user can also select to restore all of the added characters to default standard words or symbols. Thus, the step 207 is replaced by step 207a, and the step 208 is replaced by step 208a, as shown in Fig. 4O.

In step 207a, the mobile terminal receives a second restoring signal.

Optionally, the user wants to restore all of the characters to corresponding candidate standard words or symbols. The user can select a restoring-all option in a font setting interface, and the mobile terminal can generate a second restoring signal based on the selection of the user.

The mobile terminal receives a second restoring signal.

In step 208a, each character in the system font library is restored to a corresponding candidate standard word or symbol according to the second restoring signal.

The mobile terminal restores each character in the system font library to a corresponding candidate standard word or symbol according to the second restoring signal.

After all of the characters in the system font library are restored, when a text is displayed in the user interface, the default standard words or symbols will be used.

In an illustrative scenario, the mobile terminal is a smart phone. The user uses the smart phone to capture an image containing a text.

As shown in Fig. 4A, the user uses the smart phone 30 to acquire the image 31, and wants to add the text " 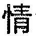 " in the image 31 to the system font library. The user selects the image 31 in the font setting interface, and performs a selecting operation with respect to the region in the image where the text " 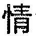 " is located, the selected region is denoted as 32. The mobile terminal recognizes the text in the selected region 32 to obtain a character " 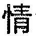 ". Also, candidate standard words corresponding to the character is recognized from the system font library, and the recognized candidate standard words are displayed at the user interface region 33. As shown in Fig. 4A, the system automatically recognizes candidate standard words " 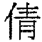 , 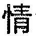 , 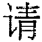 , 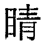 , 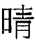 ". Depending on the actual situation, the user selects " 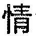 " as the actual candidate standard word. After the system receives the user operation, the original default standard word " 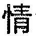 " in the system font library is replaced with the recognized character " 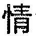 ".

After the character is added into the system font library, the newly added character " 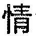 " will be displayed wherever a standard word " 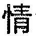 " should otherwise be displayed, on a system interface of the mobile terminal or an interface of a third party application. As shown in Fig. 4B, in a short-message sending interface, the user has inputted text in a text input box 36. In the text, the newly added character " 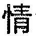 " is displayed where a standard word " 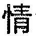 " should otherwise be displayed. In the historic message record 37, the standard word " 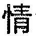 " is also replaced by the newly added character " 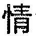 " in display.

After the user uses the character for some time, the user may get tired of the character. In this case, the user can select the character through system settings in the mobile terminal, and restore it to the originally default standard word according to the backup standard word or symbol. As shown in Fig. 4C, after the user restores the font library, in the text inputted to the text input box 38, the word " 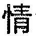 " in the text is no longer displayed as the added character " 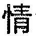 ", but as the default standard word " 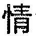 ".

The following are device embodiments of the present disclosure, which can be configured to perform the method embodiments of the present disclosure. For details that are not disclosed in the device embodiments of the present disclosure, reference can be made to the method embodiments of the present disclosure.

Fig. 5 is a block diagram of a device for adding a font provided by an embodiment of the present disclosure. The device for adding a font can be implemented with hardware, software, or a combination of software and hardware, to form an entirety or a part of the above mobile terminal for adding a font. As shown in Fig. 5, the device includes:
an acquiring module 410 configured to acquire an image;
a recognizing module 420 configured to recognize a text in the image as at least one character, the character being a font file corresponding to a single word or symbol; and
an adding module 430 configured to add the character to a default system font library, the system font library being a font library for displaying a text on a user interface.

Accordingly, in the device for adding a font provided by the embodiment of the present disclosure, an image containing a text is acquired. The text in the image is recognized as at least one character. The character is added into the default system font library. Thereby, it can solve the problem that the displayed font can be modified only by manually downloading a font library, and it can simplify the operation of modifying a font for a user: to modify a font, the user only needs to photograph a word or a symbol he is interested. In addition, the method can only modify the font of the word or symbol which is recognized, without modifying the font of all words and symbols.

Fig. 6 is a block diagram of a device for adding a font provided by an embodiment of the present disclosure. The device for adding a font can be implemented with hardware, software, or a combination of software and hardware, to form an entirety or a part of the above mobile terminal for adding a font. As shown in Fig. 6, the device includes:
an acquiring module 410 configured to acquire an image;
a recognizing module 420 configured to recognize a text in the image as at least one character, the character being a font file corresponding to a single word or symbol; and
an adding module 430 configured to add the character to a default system font library, the system font library being a font library for displaying a text on a user interface.

Optionally, the above recognizing module 420 includes:
a receiving sub-module 421 configured to receive a region selecting operation on the image; and
a first recognizing sub-module 422 configured to recognize a text in a region selected by the region selecting operation, to obtain the at least one character.

Optionally, the adding module 430 includes:
a second recognizing sub-module 431 configured to, for each character, recognize from the system font library at least one candidate standard word or symbol corresponding to the character;
a first receiving sub-module 432 configured to receive a word selecting operation on the at least one candidate standard word or symbol; and
a replacing sub-module 433 configured to, in the system font library, replace a candidate standard word or symbol selected by the word selecting operation with the character.

Optionally, the device further includes:
a first receiving module 440 configured to receive a first restoring signal; and
a first restoring module 450 configured to restore a designated character in the system font library to a corresponding candidate standard word or symbol according to the first restoring signal.

Optionally, the device further includes:
a second receiving module 460 configured to receive a second restoring signal; and
a second restoring module 470 configured to restore each character in the system font library to a corresponding candidate standard word or symbol according to the second restoring signal.

Accordingly, in the device for adding a font provided by the embodiment of the present disclosure, an image containing a text is acquired. The text in the image is recognized as at least one character. The character is added into the default system font library. Thereby, it can solve the problem that the displayed font can be modified only by manually downloading a font library, and it can simplify the operation of modifying a font for a user: to modify a font, the user only needs to photograph a word or a symbol he is interested. In addition, the method can only modify the font of the word or symbol which is recognized, without modifying the font of all words and symbols.

In the embodiments of the present disclosure, a region in the image is selected; the text in the selected region is recognized to obtain the character the user wants. Thereby, it can simplify the font adding operation, and enrich the forms of characters which can be selected by the user.

In the embodiments of the present disclosure, for each selected character, at least one candidate standard word or symbol corresponding to the character is recognized from the system font library. Thereby, it can avoid errors in word recognition, can improve accuracy in replacing of the words or symbols, and can improve user experience.

In the embodiments of the present disclosure, only for selected character, a corresponding standard word or symbol in the system font library will be replaced with the character. Thereby, it can avoid modifying the font of the whole text after the font is added. Thus, multiple fonts can be simultaneously displayed, and it can satisfy the demands of user for diversity.

In the embodiments of the present disclosure, a signal for restoring the system font library can be received, and the system font library can be restored according to the restoring signal. Thereby, it can avoid the situation that the user cannot remove a character and restore the font to the default state when the user loses interest in the character over time, and it can simplify the restoring operation of the added font.

With respect to the devices in the above embodiments, the specific manners for performing operations for individual modules therein have been described in detail in the embodiments regarding the relevant methods, which will not be elaborated herein.

An embodiment of the present disclosure provides a device for adding a font, which can perform the method for adding a font, which is provided by the present disclosure. The device for adding a font includes: a processor; and a memory for storing instructions executable by the processor;
wherein the processor is configured to perform:
acquiring an image;
recognizing a text in the image as at least one character, the character being a font file corresponding to a single word or symbol; and
adding the character to a default system font library, the system font library being a font library for displaying a text on a user interface.

Fig. 7 is a block diagram of a device for adding a font according to an exemplary embodiment. For example, the device 700 can be a mobile phone, a computer, a digital broadcast terminal, a messaging device, a gaming console, a tablet, a medical device, exercise equipment, a personal digital assistant, and the like.

Referring to Fig. 7, the device 700 can include one or more of the following components: a processing component 702, a memory 704, a power component 706, a multimedia component 708, an audio component 710, an input/output (I/O) interface 712, a sensor component 714, a communication component 716 and an image recognition component 717.

The processing component 702 typically controls overall operations of the device 700, such as the operations associated with display, telephone calls, data communications, camera operations, and recording operations. The processing component 702 can include one or more processors 718 to execute instructions to perform all or part of the steps in the above described methods. Moreover, the processing component 702 can include one or more modules which facilitate the interaction between the processing component 702 and other components. For instance, the processing component 702 can include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 can include a power management system, one or more power sources, and any other components associated with the generation, management, and distribution of power in the device 700.

The multimedia component 708 includes a screen providing an output interface between the device 700 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 708 includes a front camera and/or a rear camera. The front camera and the rear camera can receive an external multimedia datum while the device 700 is in an operation mode, such as a photographing mode or a video mode. Each of the front camera and the rear camera can be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal can be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons can include, but are not limited to, a home button, a volume button, a starting button, and a locking button.

The sensor component 714 includes one or more sensors to provide status assessments of various aspects of the device 700. For instance, the sensor component 714 can detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 can include a proximity sensor configured to detect the presence of nearby objects without any physical contact. The sensor component 714 can also include a light sensor, such as a CMOS or CCD image sensor, for use in imaging applications. In some embodiments, the sensor component 714 can also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 700 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method for adding a font.

In exemplary embodiments, there is also provided a non-transitory computer-readable storage medium including instructions, such as included in the memory 704, executable by the processor 718 in the device 700, for performing the above method for adding a font. For example, the non-transitory computer-readable storage medium can be a ROM, a RAM, a CD-ROM, a magnetic tape, a floppy disc, an optical data storage device, and the like.

## Claims

1. A method for adding a font, which is applied in a mobile terminal, **characterized in that** the method comprises:
acquiring (101, 201) an image;
recognizing (102) a text in the image as at least one character, each character being a font file corresponding to a single word or a single symbol; and
adding (103) the character to a default system font library, the system font library being a font library for displaying a text on a user interface.

2. The method of claim 1, wherein recognizing (102) a text in the image as at least one character comprises:
receiving (202) a region selecting operation on the image; and
recognizing (203) a text in a region selected by the region selecting operation, to obtain the at least one character.

3. The method of claim 1, wherein adding (103) the character to the default system font library comprises:
for each character, recognizing (204) from the system font library at least one candidate standard word or symbol corresponding to the character;
receiving (205) a word selecting operation on the at least one candidate standard word or symbol; and
in the system font library, replacing (206) a candidate standard word or symbol selected by the word selecting operation with the character.

4. The method of claim 3, wherein the method further comprises:
receiving (207) a first restoring signal; and
restoring (208) a designated character in the system font library to a corresponding candidate standard word or symbol according to the first restoring signal.

5. The method of claim 3, wherein the method further comprises:
receiving (207a) a second restoring signal; and
restoring (208a) each character in the system font library to a corresponding candidate standard word or symbol according to the second restoring signal.

6. A device for adding a font, which is applied in a mobile terminal, **characterized in that** the device comprises:
an acquiring module (410) configured to acquire an image;
a recognizing module (420) configured to recognize a text in the image as at least one character, the character being a font file corresponding to a single word or symbol; and
an adding module (430) configured to add the character to a default system font library, the system font library being a font library for displaying a text on a user interface.

7. The device of claim 6, wherein the recognizing module (420) comprises:
a receiving sub-module (421) configured to receive a region selecting operation on the image; and
a first recognizing sub-module (422) configured to recognize a text in a region selected by the region selecting operation, to obtain the at least one character.

8. The device of claim 6, wherein the adding (430) module comprises:
a second recognizing sub-module (431) configured to, for each character, recognize from the system font library at least one candidate standard word or symbol corresponding to the character;
a first receiving sub-module (432) configured to receive a word selecting operation on the at least one candidate standard word or symbol; and
a replacing sub-module (433) configured to, in the system font library, replace a candidate standard word or symbol selected by the word selecting operation with the character.

9. The device of claim 8, wherein the device further comprises:
a first receiving module (440) configured to receive a first restoring signal; and
a first restoring module (450) configured to restore a designated character in the system font library to a corresponding candidate standard word or symbol according to the first restoring signal.

10. The device of claim 8, wherein the device further comprises:
a second receiving module (460) configured to receive a second restoring signal; and
a second restoring module (470) configured to restore each character in the system font library to a corresponding candidate standard word or symbol according to the second restoring signal.

11. A device for adding a font, **characterized in that** the device comprises:
a processor; and
a memory for storing instructions executable by the processor;
wherein the processor is configured to perform:
acquiring an image;
recognizing a text in the image as at least one character, the character being a font file corresponding to a single word or symbol; and
adding the character to a default system font library, the system font library being a font library for displaying a text on a user interface.

12. A computer program including instructions for executing the steps of a method for adding a font according to any one of claims 1 to 5 when said program is executed by a computer.

13. A recording medium readable by a computer and having recorded thereon a computer program including instructions for executing the steps of a method for adding a font according to any one of claims 1 to 5.
